# EUROPEAN PATENT APPLICATION

(11) **EP 3 958 580 A1**
(43) Date of publication of application: **23.02.2022**
(21) Application number: 20919374.7
(22) Date of filing: 07.12.2020
(51) Int. Cl.: H04N 21/472, H04N 21/44, G06F 16/78

(54) **VIDEO DATA PRODUCTION METHOD AND APPARATUS, ELECTRONIC DEVICE, AND COMPUTER READABLE MEDIUM**

(30) Priority: 24.06.2020 CN 202010590913
(71) Applicant: Baidu Online Network Technology (Beijing) Co., Ltd., Beijing 100085 (CN)
(72) Inventor: LI, Weiguo, Beijing 100085 (CN)
(74) Representative: V.O.
(86) International application number: PCT/CN2020/134291
(87) International publication number: WO 2021/258655

(57) **Abstract**

The present disclosure provides a method for producing a video material, and relates to the fields of computer and video image processing technologies. This method includes: acquiring, in response to an operation of inserting a label triggered by a user, a timestamp of a currently played video image in an original video; acquiring label information added by the user for the video image; and associating and integrating the label information, the timestamp and video data of the original video to generate an integrated video material carrying the label information. This method facilitates adding the label information while retaining the integrity of the original video. When the integrated video material is repeatedly watched subsequently, the label position can be quickly and accurately located, so that a search time is reduced and learning efficiency is improved, thereby improving a user experience. The disclosure further provides an apparatus for producing a video material, an electronic device and a computer readable medium.

## Description

This application claims the priority of Chinese Patent Application No. 202010590913.9, titled "METHOD AND APPARATUS FOR PTODUCING VIDEO MATERIAL, ELECTRONIC DEVICE AND COMPUTER READABLE MEDIUM", filed on June 24, 2020, the content of which is incorporated herein by reference in its entirety.

### TECHNICAL FIELD

Embodiments of the present disclosure relate to the fields of computer and video image processing technologies, and in particular to a method and apparatus for producing a video material, an electronic device and a computer readable medium.

### BACKGROUND

With the optimization of the network environment and the popularization of mobile smart devices, mobile terminals have become the main ways for people to obtain information. Videos can express information more intuitively and clearly, so videos are widely transmitted and used as transmission carriers.

When users watch videos, especially, knowledge-based videos or video with rich contents, they wish to label or take notes at certain video nodes for subsequent repeated watching or learning. Video players can only search for video nodes that users want to watch repeatedly through double speed of playing or manually adjusting the play progress.

### SUMMARY

Embodiments of the present disclosure provide a method and apparatus for producing a video material, an electronic device and a computer readable medium.

In a first aspect, embodiments of the present disclosure provide a method for producing a video material, which includes:
acquiring, in response to an operation of inserting a label triggered by a user, a timestamp of a currently played video image in an original video;
acquiring label information added by the user for the video image; and
associating and integrating the label information, the timestamp and video data of the original video to generate an integrated video material carrying the label information.

In some embodiments, acquiring the label information added by the user for the video image includes:
acquiring the label information added by the user for the video image through a label entry module.

In some embodiments, before associating and integrating the label information, the timestamp and the video data of the original video to generate the integrated video material carrying the label information, the method further includes:
acquiring label auxiliary information, where the label auxiliary information is a description of the label and a restricted usage authority; and
associating and integrating the label information, the timestamp and the video data of the original video to generate the integrated video material carrying the label information includes:
associating and integrating the label information, the timestamp, the label auxiliary information and the video data of the original video to generate the integrated video material carrying the label information.

In some embodiments, the label auxiliary information includes at least one of user information, user configuration information or an identifier of the original video.

In some embodiments, the user information includes a user account and/or an identifier of a terminal device used by the user; and the user configuration information includes user authority information.

In some embodiments, after associating and integrating the label information, the timestamp and the video data of the original video to generate the integrated video material carrying the label information, the method further includes:
parsing, in response to a playback instruction of the user, the integrated video material to obtain all the label and the label information in data of the integrated video material;
displaying all the label on a playback page; and
displaying based on the label selected by the user the label information corresponding to the selected label.

In some embodiments, after displaying the label information corresponding to the video node based on the video node selected by the user, the method further includes:
receiving modification information of the user for the label, and updating the label information based on the modification information; and
associating and integrating the updated label information, the timestamp, the label auxiliary information and the video data of the original video to generate an updated integrated video material carrying the updated label information

In some embodiments, after associating and integrating the label information, the timestamp and the video data of the original video to generate the integrated video material carrying the label information, the method further includes:
sharing the integrated video material to a sharing platform for an other user on the sharing platform to obtain the integrated video material.

In some embodiments, before acquiring, in response to the operation of inserting the label triggered by the user, the timestamp of the currently played video image in the original video, the method further includes:
filtering a video resource based on video usage information to obtain the original video, where the video usage information includes one or more of a playback amount of a video, a replay rate of the video, a user comment of the video and a number of a like of the video.

In some embodiments, the label information includes a mark and/or a note.

In a second aspect, embodiments of the present disclosure provide an apparatus for producing a video material, which includes:
a trigger module configured to trigger, in response to a trigger instruction of a user, an operation of inserting a label;
a first acquisition module configured to acquire a timestamp of a currently played video image in an original video;
a second acquisition module configured to acquire label information added by the user for the video image; and
an association module configured to associate and integrate the label information, the timestamp and video data of the original video to generate an integrated video material carrying the label information.

In a third aspect, embodiments of the present disclosure provide an electronic device, which includes:
one or more processors;
a memory storing one or more programs, which, when executed by the one or more processors, cause the one or more processors to implement the method for producing a video material according to any of above embodiments; and
one or more I/O interfaces connecting the processors and the memory and configured to implement information interaction between the processors and the memory.

In a fourth aspect, embodiments of the present disclosure provide a computer readable medium storing a computer program, which, when executed by a processor, implements the method for producing a video material according to any of above embodiments.

According to the method for producing a video material provided by embodiments of the present disclosure, in response to the operation of inserting the label triggered by the user, the timestamp of the currently played video image is acquired in the original video; the label information added by the user for the video image is acquired; and the label information, the timestamp and the video data of the original video are associated and integrated to generate the integrated video material carrying the label information. The user can directly add the label information to the data of the original video while watching the original video, as such the operation is convenient, and the integrity of the original video is preserved. When the integrated video material is repeatedly watched subsequently, the label position can be quickly and accurately located, so that a search time is reduced and learning efficiency is improved, thereby improving a user experience.

### BRIEF DESCRIPTION OF THE DRAWINGS

The accompanying drawings serve to provide a further understanding of embodiments of the present disclosure, constitute a part of the specification, serve to explain the present disclosure together with embodiments of the present disclosure, and do not constitute a limitation to the present disclosure. By describing detailed example embodiments with reference to the accompanying drawing, the above and other features and advantages will become more apparent to those skilled in the art. As shown in the accompanying drawings,
Fig. 1 is a flowchart of a method for producing a video material provided by embodiments of the present disclosure;
Fig. 2 is a schematic diagram of a label editing page provided by embodiments of the present disclosure;
Fig. 3 is a flowchart of another method for producing a video material provided by embodiments of the present disclosure;
Fig. 4 is a flowchart of another method for producing a video material provided by embodiments of the present disclosure;
Fig. 5 is a flowchart of yet another method for producing a video material provided by embodiments of the present disclosure;
Fig. 6 is a flowchart of yet another method for producing a video material provided by embodiments of the present disclosure;
Fig. 7 is a schematic block diagram of an apparatus for producing a video material according to embodiments of the present disclosure; and
Fig. 8 is a block diagram of a composition of an electronic device provided by embodiments of the present disclosure.

### DETAILED DESCRIPTION OF EMBODIMENTS

In order to enable those skilled in the art to better understand the technical solutions of the present disclosure, the method and apparatus for producing a video material, an electronic device and a computer readable medium that are provided by the present disclosure will be described in detail below with reference to the accompanying drawing.

The example embodiments will be described more fully hereinafter with reference to the accompanying drawing. But the example embodiments may be embodied in different forms and should not be construed as being limited to the embodiments set forth herein. On the contrary, the purpose of providing these embodiments is to make the present disclosure thorough and complete, and to enable those skilled in the art to fully understand the scope of the present disclosure.

Embodiments of the present disclosure and the features in the embodiments may be combined with each other on a non-conflict basis.

As used herein, the term "and/or" includes any and all combinations of one or more of relevant listed items.

The terms used herein are only used to describe specific embodiments and are not intended to limit the present disclosure. As used herein, the singular forms "a", "an" and "the" are alternatively intended to include the plural forms, unless the context clearly dictates otherwise. It should be appreciated that when the terms "comprising", "including" and/or " made of' are used in the specification, the presence of the feature, whole, step, operation, element and/or component is specified, but the presence or addition of one or more other features, wholes, steps, operations, elements, components and/or groups thereof is not excluded.

Unless defined otherwise, all terms (including technical and scientific terms) used herein have the same meanings as commonly understood by those skilled in the art. It should be appreciated that terms such as those defined in commonly used dictionaries should be interpreted as having meanings consistent with their meanings in the context of the relevant technology and the present disclosure, and should not be interpreted as having idealized or excessively formal meanings unless expressly so defined herein.

For a knowledge-based video, a user wishes to label or take notes on certain video images (video nodes) in an original video for subsequent repeated watching or learning. Moreover, in order to improve learning efficiency, it is only necessary to focus on watching the video images corresponding to label positions, and it is not necessary to repeatedly play the entire original video. Meanwhile, the entire original video is retained, to meet some special requirements, such as a requirement for facilitating other users to obtain both the entire original video and the labels added by the current user.

At present, video labels refer to establishing an index table based on a start time and end time of a target video segment in an original video and a video label, and then the index table and a video number of the original video are stored to obtain a video note. It is not difficult to understand that the video note and the original video are two files. When the video note is required to be viewed, the start time and end time of the target video segment are viewed according to the index table, and then the original video is searched according to the video number and the start time and end time of the target video segment to obtain the target video segment. The approach in which the video note and the original video are separated is not only slow in response speed. Further, when the original video is played, the video note of the user for the original video can not be directly obtained, and can only be searched from the file corresponding to the video note, such that the entire original video cannot be obtained, and the user experience is affected.

In a first aspect, embodiments of the present disclosure provide a method for producing a video material, which is used to produce an integrated video material with a video label, so that a user can conveniently and quickly locate a desired video image in an original video.

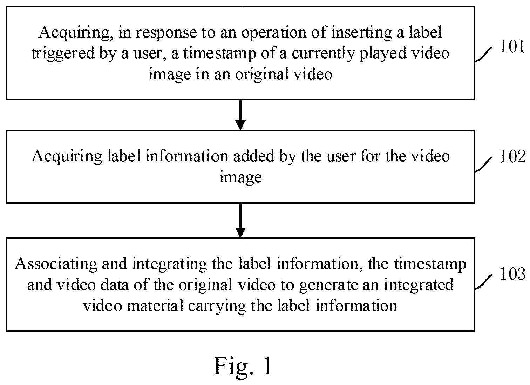

Fig. 1 is a flowchart of a method for producing a video material provided by embodiments of the present disclosure. As shown in Fig. 1, the method for producing a video material includes steps 101 to 103.

Step 101 includes acquiring, in response to an operation of inserting a label triggered by a user, a timestamp of a currently played video image in an original video.

The original video is original video data released by a video resource publisher and can be played on a terminal. For example, the original video is a movie, a video courseware, a documentary film, a recorded learning video and the like. A video format of the original video may be an MPEG, AVI, MOV, ASF or WMV format supported by the terminal.

A video image is a certain video frame in the original video. The currently played video image is a video image displayed on a display screen when the original video is played.

When the original video is a documentary film, the user may insert a label in a video image when the user is interested in the video image of the documentary film while playing the documentary film, such that when the documentary film is replayed subsequently, the documentary file can jump directly to the video image. Alternatively, if the user is interested in a certain video segment of the documentary film, the user may insert a label at a start position of the video segment, such that when the documentary film is replayed subsequently, the documentary file can jump directly to the start position of the video segment and start playing at the start position.

When the original video is a video courseware, the user may insert a label at a start position of a certain video segment if the user is interested in the video segment of the video courseware while playing the video courseware, such that when the video courseware is replayed subsequently, the video courseware can jump directly to the start position of the video segment and start playing at the start position. Alternatively, when the user is interested in a video image of the video courseware, the user may insert a label in the video image, such that when the video courseware is replayed subsequently, the video courseware can jump directly to the video courseware.

In some embodiments, in the process of playing the original video, the user may trigger the operation of inserting a label through a trigger button, a trigger action or a trigger voice on a playback page. When the terminal is a computer terminal, the trigger operation may be implemented by a mouse, a keyboard or the like. For example, when the trigger operation is performed using a mouse, a preset operation button is clicked by the mouse, and a click action may be a single click or a double click. For another example, when the trigger operation is performed using a keyboard, a preset shortcut key is pressed. The shortcut key may be any key on the keyboard or a combination of multiple keys on the keyboard. A specific way of setting the shortcut key and a type of the shortcut key are not limited herein.

When the terminal is a mobile terminal or a terminal having a touch function, the trigger operation may be implemented by touching or the like. For example, the user touches a preset button, or slides the preset button to implement the trigger operation.

The currently played video image refers to an image displayed on a display screen of the terminal at a current time, and the timestamp refers to a time node of the video image in the original video. For example, the terminal is playing Chapter X, Section X of a mathematics course of a video courseware, and what is displayed on the display screen of the terminal at the current time is a video image of the video courseware at 9:30 (9 minutes and 30 seconds), so the timestamp corresponding to the video image is 9:30.

Step 102 includes acquiring label information added by the user for the video image.

The label information includes a mark, a learning note, a review and the like. Here, the mark corresponds to a bookmark, which is only used to indicate that a video image is important. The learning note is a note added by the user for a video image, which may be an explanation or question of a content of the video image, or may be a summary or a brief summary. Alternatively, the note is a summary or explanation of the video image and a video segment before the video image.

For example, the user summarizes a content at the time node of 9:30 and contents within 30 seconds before the time node of 9:30, i.e., summarizes contents of the video courseware between a time node of 9:00 and the time node of 9:30, and adds a label at the time node 9:30. In some embodiments, the label information may be added directly within the video image or may be attached externally to an edge area of the video image.

In some embodiments, the user may add a label to the video image by invoking a label entry module, which may be a label control embedded in a player program. For example, after the user operates an activation button, the label entry module is activated, a label editing page is displayed on the display screen of the terminal, and the user can input and edit a content on the label editing page.

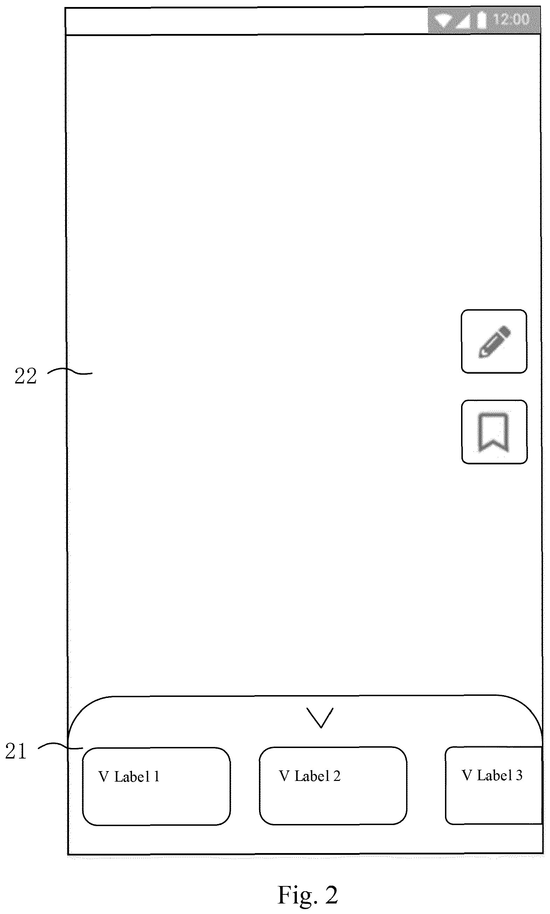

Fig. 2 is a schematic diagram of a label editing page provided by embodiments of the present disclosure. As shown in Fig. 2, the label editing page includes a label numbering area 21 and a label content editing area 22. Information such as a label number and a label name may be input in the label numbering area 21. Information such as a note may be input in the label content editing area 22. Moreover, operations such as deleting, copying and pasting may be performed on input contents in the label numbering area and the label content editing area.

In some embodiments, the label entry module is an application program installed on the terminal, such as a writing pad and a sticky note, and a player is invokingly connected to the application program. When the user touches an activation button, the application program installed on the terminal is invoked, and the display screen displays an interface of the application program. For example, when the writing pad is invokingly connected to the player, if the user slides an activation button, the writing pad is invoked, the display screen displays an interface of the writing pad, and the user can edit a content of a label on the writing pad. After the content of the label is edited, the user can click a finish button, and the content of the label is automatically associated with a timestamp and video data of an original video.

In some embodiments, when the user activates the operation of inserting a label, an activated label entry module and an invoked editable application may occupy an entire page of the display screen or part of the display screen.

Step 103 includes associating and integrating the label information, the timestamp and video data of the original video to generate an integrated video material carrying the label information.

The integrated video material includes not only the video data of the original video, but also the label information and the timestamp. The timestamp is associated with the label information, and meanwhile the label information and the timestamp are associated with the video data of the original video. An association refers to adding the label information to the video data of the original video and associating the labeling information with the timestamp, so that the label information, the timestamp and the video data of the original video are integrated into an overall data. When the label is activated, the player may jump directly to a position of the timestamp and play a corresponding video image.

In this embodiment, the label information, the timestamp and the video data of the original video are integrated into the integrated video material through a data model, and the integrated video material may be regarded as an original video containing more information, that is, the integrated video material is one file. When playing an integrated video material, a player can directly parse the integrated video material, and display all time nodes of added labels in the integrated video material according to timestamps, and the user can view label information by only clicking a corresponding time node. The data model may be any model capable of associating and integrating label information, a timestamp and video data of an original video, which is not limited herein.

In some embodiments, a player may display a time node at which a label is added according to a preset icon. The preset icon may be a cartoon graphic, an animal graphic, a pointer graphic or a time graphic. For example, the time graphic shows a time in hours, minutes and seconds. In some embodiments, if a duration of the integrated video material is less than one hour, the time graphic shows only minutes and seconds. If the duration of the integrated video material exceeds one hour, the time graphic shows hours, minutes and seconds.

According to the method for producing a video material provided by this embodiment, in response to the operation of inserting the label triggered by the user, the timestamp of the currently played video image is acquired in the original video; the label information added by the user for the video image is acquired; and the label information, the timestamp and the video data of the original video are associated and integrated to generate the integrated video material carrying the label information. Since the integrated video material is one file, the integrated video is convenient to be stored and shared, and can be quickly invoked and buffered when being played. Moreover, the user can directly add the label information to the data of the original video while watching the original video, which is convenient to operate and retains the integrity of the original video. When the integrated video material is repeatedly watched subsequently, the label position can be quickly and accurately located, so that a search time is reduced and learning efficiency is improved, thereby improving a user experience.

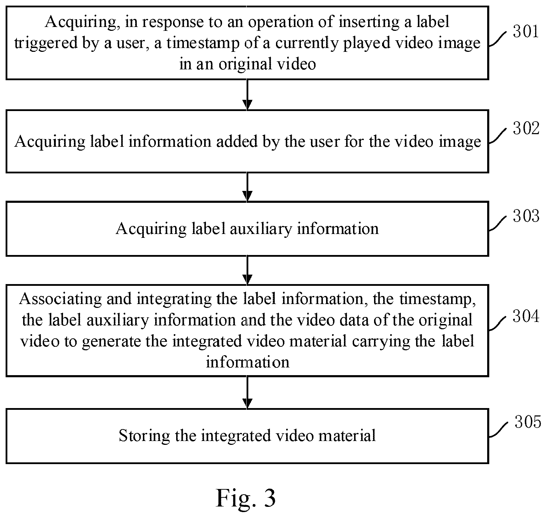

Fig. 3 is a flowchart of another method for producing a video material provided by embodiments of the present disclosure. As shown in Fig. 3, the method for producing a video material includes steps 301 to 305.

Step 301 includes acquiring, in response to an operation of inserting a label triggered by a user, a timestamp of a currently played video image in an original video.

The original video is original video data released by a video resource publisher and can be played on a terminal. For example, the original video is a movie, a video courseware, a documentary film, a recorded learning video and the like. A video format of the original video may be an MPEG, AVI, MOV, ASF or WMV format supported by the terminal.

A video image is a certain video frame in the original video. The currently played video image is a video image displayed on a display screen when the original video is played.

The timestamp refers to a time node of the video image in the original video. For example, the terminal plays Chapter X, Section X of a mathematics course of a video courseware, and what is displayed on the display screen of the terminal at the current time is a video image of the video courseware at 9:30 (9 minutes and 30 seconds), so the timestamp corresponding to the video image is 9:30.

The label may be a mark, a learning note, a review or the like. For a further description of the mark, reference may be made to the step 101 of the previous embodiment, which is not described in detail herein for the sake of saving a length of the present disclosure.

In some embodiments, the user may trigger the operation of inserting a label through a trigger button, a trigger action or a trigger voice on a playback page. Moreover, the operation of inserting a label may be triggered in different ways according to different terminals. For example, when the terminal is a computer, the operation of inserting a label may be triggered through a mouse or a keyboard. When the terminal is a mobile phone, the operation of inserting a label may be triggered by touching.

Step 302 includes acquiring label information added by the user for the video image.

The label information includes a mark, a learning note, a review and the like. Here, the mark corresponds to a bookmark, which is only used to indicate that a video image is important. The learning note is a note added by the user for a video image, which may be an explanation or question of a content of the video image, or may be a summary or a brief summary. Alternatively, the note is a summary or explanation of the video image and a video segment before the video image.

For example, the user summarizes a content at the time node of 9:30 and contents within 30 seconds before the time node of 9:30, i.e., summarizes contents of the video courseware between a time node of 9:00 and the time node of 9:30, and adds a label at the time node 9:30. In some embodiments, the label information may be added directly within the video image or may be attached externally to an edge area of the video image.

In some embodiments, the user may add a label to the video image by invoking a label entry module, which may be a label control embedded in a player program. For example, after the user operates an activation button, the label entry module is activated, a label editing page is displayed on the display screen of the terminal, and the user can input and edit a content on the label editing page.

Step 303 includes acquiring label auxiliary information.

The label auxiliary information is a description of the label and a restricted usage authority. For example, the label auxiliary information includes at least one of user information, user configuration information or an identifier of the original video.

In some embodiments, the user information includes a user account and/or an identifier of a terminal device used by the user. The user account is an account used to distinguish a user watching the original video, or an account used to distinguish a user adding the label information. The user account may be an account of a user using a player, or an account of a user logging into a server, which is a server storing the original video. The user account may alternatively be an account of a user logging into a terminal. The identifier of the terminal device used by the user is also intended to distinguish the user adding the label. When there is a corresponding relationship between a terminal device and a user, the user may be distinguished through the identifier of the terminal device.

In some embodiment, the user configuration information is authority information added to the original video by the user adding the label, and includes user authority information. The user authority information is used to restrict a usage authority of a user. For example, when a user adds label information, the user may set that user A can view all the label information, and user B can only view labels and cannot view notes. For another example, when a user adds label information, the user may set that user C can view label information numbered with a single number, and user D can view label information numbered with a double number.

In some embodiments, the identifier of the original video is unique and is used to distinguish the original video. A corresponding original video can be obtained through the identifier of the original video.

Step 304 includes associating and integrating the label information, the timestamp, the label auxiliary information and the video data of the original video to generate the integrated video material carrying the label information.

In some embodiments, in this embodiment, the label information, the timestamp, the label auxiliary information and the video data of the original video are integrated into the integrated video material through a data model, and the integrated video material can be regarded as an original video containing more information, that is, the integrated video material is one file. When playing an integrated video material, a player can directly parse the integrated video material, and display all time nodes of added labels in the integrated video material according to timestamps, and the user can view label information by only clicking a corresponding time node. The data model may be any model capable of associating and integrating label information, a timestamp, label auxiliary information and video data of an original video, which is not limited herein.

It is not difficult to understand that since the identifier of the original video is unique, the integrated video material can be distinguished through the identifier of the original video. When the user shares the integrated video material to a sharing platform, other users can obtain the corresponding integrated video material through the identifier of the original video, obtain a producer of the integrated video material through user information, and obtain a playback authority according to the user authority information.

Step 305 storing the integrated video material.

In some embodiments, the user may store the integrated video material, in a local storage medium, at a source of the original video, or on a third-party server based on requirements.

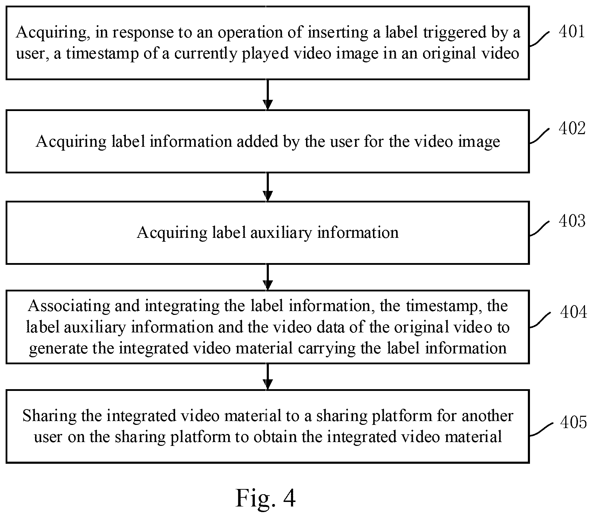

Fig. 4 is a flowchart of another method for producing a video material provided by embodiments of the present disclosure. As shown in Fig. 4, the method for producing a video material includes step 401 to 405.

Step 401 includes acquiring, in response to an operation of inserting a label triggered by a user, a timestamp of a currently played video image in an original video.

The original video is original video data released by a video resource publisher and can be played on a terminal. For example, the original video is a movie, a video courseware, a documentary film, a recorded learning video and the like. A video format of the original video may be an MPEG, AVI, MOV, ASF or WMV format supported by the terminal.

A video image is a certain video frame in the original video. The currently played video image is a video image displayed on a display screen when the original video is played.

The timestamp refers to a time node of the video image in the original video. For example, the terminal plays Chapter X, Section X of a mathematics course of a video courseware, and what is displayed on the display screen of the terminal at the current time is a video image of the video courseware at 9:30 (9 minutes and 30 seconds), so the timestamp corresponding to the video image is 9:30.

The label may be a mark, a learning note, a review or the like. For a further description of the mark, reference may be made to the step 101 of the previous embodiment, which is not described in detail herein for the sake of saving a length of the present disclosure.

In some embodiments, the user may trigger the operation of inserting a label through a trigger button, a trigger action or a trigger voice on a playback page. Moreover, the operation of inserting a label may be triggered in different ways according to different terminals. For example, when the terminal is a computer, the operation of inserting a label may be triggered through a mouse or a keyboard. When the terminal is a mobile phone, the operation of inserting a label may be triggered by touching.

Step 402 includes acquiring label information added by the user for the video image.

The label information includes a mark, a learning note, a review and the like. Here, the mark corresponds to a bookmark, which is only used to indicate that a video image is important. The learning note is a note added by the user for a video image, which may be an explanation or question of a content of the video image, or may be a summary or a brief summary. Alternatively, the note is a summary or explanation of the video image and a video segment before the video image.

For example, the user summarizes a content at the time node of 9:30 and contents within 30 seconds before the time node of 9:30, i.e., summarizes contents of the video courseware between a time node of 9:00 and the time node of 9:30, and adds a label at the time node 9:30. In some embodiments, the label information may be added directly within the video image or may be attached externally to an edge area of the video image.

In some embodiments, the user may add a label to the video image by invoking a label entry module, which may be a label control embedded in a player program. For example, after the user operates an activation button, the label entry module is activated, a label editing page is displayed on the display screen of the terminal, and the user can input and edit a content on the label editing page.

Step 403 includes acquiring label auxiliary information.

The label auxiliary information is a description of the label and a restricted usage authority. For example, the label auxiliary information includes at least one of user information, user configuration information or an identifier of the original video.

In some embodiments, the user information includes a user account and/or an identifier of a terminal device used by the user. The user account is an account used to distinguish a user watching the original video, or an account used to distinguish a user adding the label information. The user account may be an account of a user using a player, or an account of a user logging in to a server, which is a server storing the original video. The user account may alternatively be an account of a user logging in to a terminal. The identifier of the terminal device used by the user is also intended to distinguish the user adding the label. When there is a corresponding relationship between a terminal device and a user, the user may be distinguished through the identifier of the terminal device.

In some embodiments, the user configuration information is authority information added to the original video by the user adding the label, and includes user authority information. The user authority information is used to restrict a usage authority of a user. For example, when a user adds label information, the user may set that user A can view all the label information, and user B can only view labels and cannot view notes. For another example, when a user adds label information, the user may set that user C can view label information numbered with an odd number, and user D can view label information numbered with an even number.

In some embodiments, the identifier of the original video is unique and is used to distinguish the original video. A corresponding original video can be obtained through the identifier of the original video.

Step 404 includes associating and integrating the label information, the timestamp, the label auxiliary information and the video data of the original video to generate the integrated video material carrying the label information.

In some embodiments, the integrated video material includes the label information, the timestamp, the label auxiliary information and the video data of the original video. The label information, the timestamp and the label auxiliary information are associated with the video data of the original video.

It is not difficult to understand that since the identifier of the original video is unique, the integrated video material can be distinguished through the identifier of the original video.

When the user shares the integrated video material to a sharing platform, other users can obtain the corresponding integrated video material through the identifier of the original video, obtain a producer of the integrated video material through user information, and obtain a playback authority according to the user authority information.

In some embodiments, the user may store the integrated video material, in a local storage medium, at a source of the original video, or on a third-party server based on requirements.

Step 405 includes sharing the integrated video material to a sharing platform for an other user on the sharing platform to obtain the integrated video material.

In some embodiments, the user shares the integrated video material to the sharing platform, and shares it to friends or others through the sharing platform. The sharing platform may be a sharing platform on which the user currently logs in, or may be a third-party sharing platform different from the sharing platform on which the user currently logs in.

The other user acquires the integrated video material through the sharing platform, and after the other user parses the integrated video material through a player, the player determines an authority of the other user through the user authority information in the label auxiliary information, and plays the integrated video material according to the authority.

In some embodiments, when the user plays the integrated video material, and the time node at which the label is inserted may be all displayed on the playback page for quick locating by the user. In addition, the user may modify the label information.

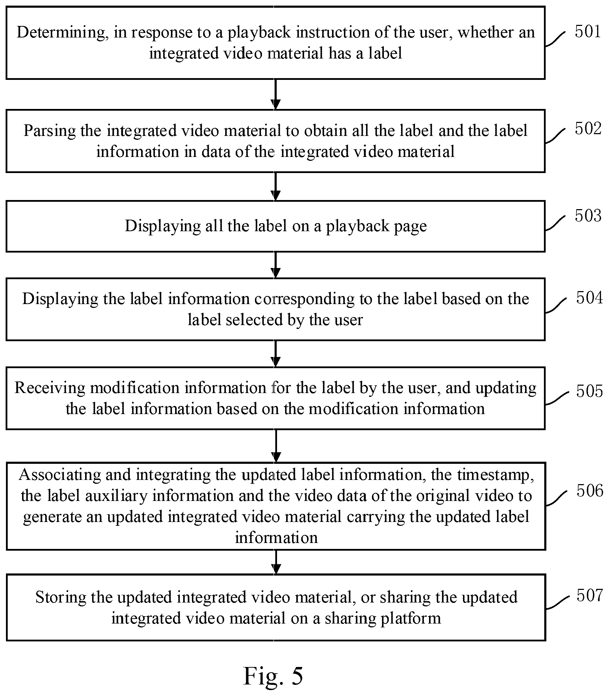

Fig. 5 is a flowchart of yet another method for producing a video material provided by embodiments of the present disclosure. As shown in Fig. 5, the method for producing a video material includes steps 501 to 507.

Step 501 includes determining, in response to a playback instruction of the user, whether an integrated video material has a label.

The player determines whether the integrated video material has the label after receiving the playback instruction of the user. In some embodiments, the player may determine whether the integrated video material has the label through label data.

Step 502 includes parsing the integrated video material to obtain all the label and the label information in data of the integrated video material.

In this embodiment, when the integrated video material has the label, the integrated video material is parsed to obtain all the label and the label information in the data of the integrated video material.

Step 503 includes displaying all the label on a playback page.

The playback page is all or a part of a display page of the terminal. For example, when the display page of the terminal displays multiple reference programs, the playback page may be the part of the display page of the terminal. When the display page of the terminal displays only the player, the playback page may be all the display page of the terminal. However, when the display page of the terminal only displays the player, the playback page may alternatively be the part of the display page of the terminal.

In this embodiment, all labels are displayed on the playback page, which facilitates the user to quickly and accurately locate a desired position, shortens a search time, and improves efficiency, thereby improving a user experience.

Step 504 includes displaying the label information corresponding to the label based on the label selected by the user.

In some embodiments, the user may select the label of the label information that requires to be further displayed by touching. For example, when the user clicks a label icon, label information corresponding to the label icon is displayed on the display page.

Step 505 includes receiving modification information for the label by the user, and updating the label information based on the modification information.

In some embodiments, if the user needs to modify the label information, the user may click a modification button to enter the label entry module for modifying. In other embodiments, when the user clicks the label icon, the label information is displayed directly in the label entry module so that the user can directly modify the label information and update the label information.

Step 506 includes associating and integrating the updated label information, the timestamp, the label auxiliary information and the video data of the original video to generate an updated integrated video material carrying the updated label information.

Step 507 includes storing the updated integrated video material, or sharing the updated integrated video material on a sharing platform.

In some embodiments, the user may store the integrated video material in a local storage medium, at a source of the original video, or on a third-party server based on requirements. Alternatively, the updated integrated video material may be shared on a sharing platform, or the updated integrated video material may be shared on a sharing platform while being stored.

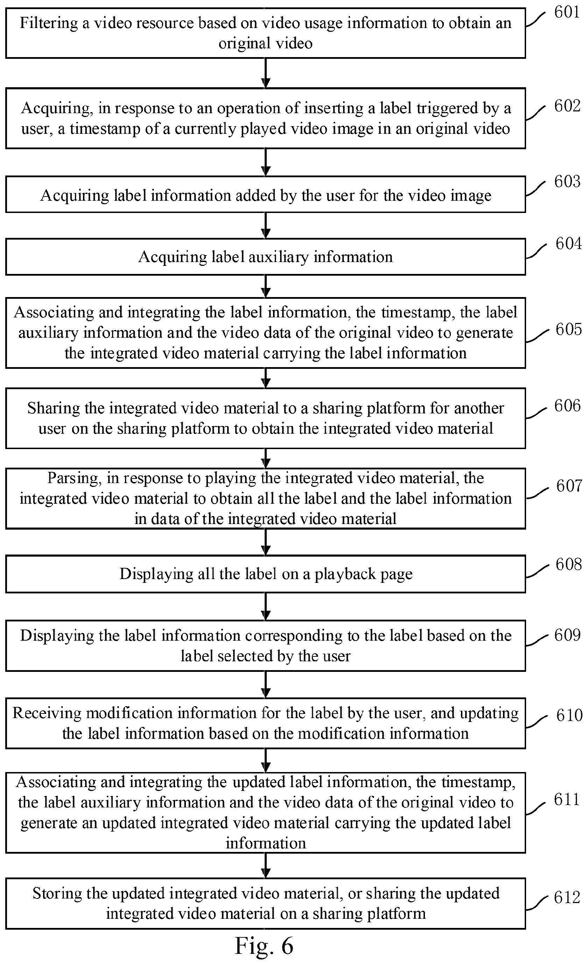

Fig. 6 is a flowchart of yet another method for producing a video material provided by embodiments of the present disclosure. As shown in Fig. 6, the method for producing a video material includes steps 601 to 612.

Step 601 includes filtering a video resource based on video usage information to obtain an original video.

The video usage information includes one or more of a playback amount of a video, a replay rate of the video, a user comment of the video and a number of likes of the video.

For a video material production platform, or a user who wishes to obtain a learning material from the Internet, video usage information of a video material may be analyzed through a background big data analysis module, and a valuable original video material is selected based on an analysis result, thereby reducing unnecessary waste of a resource.

Step 602 includes acquiring, in response to an operation of inserting a label triggered by a user, a timestamp of a currently played video image in an original video.

A video image is a certain video frame in the original video. The currently played video image is a video image displayed on a display screen when the original video is played.

The timestamp refers to a time node of the video image in the original video. For example, the terminal plays Chapter X, Section X of a mathematics course of a video courseware, and what is displayed on the display screen of the terminal at the current time is a video image of the video courseware at 9:30 (9 minutes and 30 seconds), so the timestamp corresponding to the video image is 9:30.

The label may be a mark, a learning note, a review or the like. For a further description of the mark, reference may be made to the step 101 of the previous embodiment, which is not described in detail herein for the sake of saving a length of the present disclosure.

In some embodiments, the user may trigger the operation of inserting a label through a trigger button, a trigger action or a trigger voice on a playback page. Moreover, the operation of inserting a label may be triggered in different ways according to different terminals. For example, when the terminal is a computer, the operation of inserting a label may be triggered through a mouse or a keyboard. When the terminal is a mobile phone, the operation of inserting a label may be triggered by touching.

Step 603 includes acquiring label information added by the user for the video image.

The label information includes a mark, a learning note, a review and the like. Here, the mark corresponds to a bookmark, which is only used to indicate that a video image is important. The learning note is a note added by the user for a video image, which may be an explanation or question of a content of the video image, or may be a summary or a brief summary. Alternatively, the note is a summary or explanation of the video image and a video segment before the video image.

In some embodiments, the user may add a label to the video image by invoking a label entry module, which may be a label control embedded in a player program. For example, after the user operates an activation button, the label entry module is activated, a label editing page is displayed on the display screen of the terminal, and the user can input and edit a content on the label editing page.

Step 604 includes acquiring label auxiliary information.

The label auxiliary information is a description of the label and a restricted usage authority. For example, the label auxiliary information includes at least one of user information, user configuration information or an identifier of the original video.

In some embodiments, the user information includes a user account and/or an identifier of a terminal device used by the user. The user account is an account used to distinguish a user watching the original video, or an account used to distinguish a user adding the label information. The user account may be an account of a user using a player, or an account of a user logging in to a server, which is a server storing the original video. The user account may alternatively be an account of a user logging in to a terminal. The identifier of the terminal device used by the user is also intended to distinguish the user adding the label. When there is a corresponding relationship between a terminal device and a user, the user may be distinguished through the identifier of the terminal device.

Step 605 includes associating and integrating the label information, the timestamp, the label auxiliary information and the video data of the original video to generate the integrated video material carrying the label information.

In some embodiments, the integrated video material includes the label information, the timestamp, the label auxiliary information and the video data of the original video. The label information, the timestamp and the label auxiliary information are associated with the video data of the original video.

Step 606 includes sharing the integrated video material to a sharing platform for an other user on the sharing platform to obtain the integrated video material.

In some embodiments, the user shares the integrated video material to the sharing platform, and shares it to friends or others through the sharing platform. The sharing platform may be a sharing platform on which the user currently logs in, or may be a third-party sharing platform different from the sharing platform on which the user currently logs in.

Step 607 includes parsing, in response to playing the integrated video material, the integrated video material to obtain all the label and the label information in data of the integrated video material.

In this embodiment, when the integrated video material has the label, the integrated video material is parsed to obtain all the label and the label information in the data of the integrated video material.

Step 608 includes displaying all the label on a playback page.

The playback page is all or part of a display page of the terminal. For example, when the display page of the terminal displays multiple reference programs, the playback page may be part of the display page of the terminal. When the display page of the terminal displays only the player, the playback page may be all the display page of the terminal. However, when the display page of the terminal only displays the player, the playback page may alternatively be part of the display page of the terminal.

Step 609 includes displaying the label information corresponding to the label based on the label selected by the user.

In some embodiments, the user may select the label of the label information that requires to be further displayed by touching. For example, when the user clicks a label icon, label information corresponding to the label icon is displayed on the display page.

Step 610 includes receiving modification information for the label by the user, and updating the label information based on the modification information.

In some embodiments, if the user needs to modify the label information, the user can click a modification button to enter the label entry module for modifying. In other embodiments, when the user clicks the label icon, the label information is displayed directly in the label entry module so that the user can directly modify the label information and update the label information.

Step 611 includes associating and integrating the updated label information, the timestamp, the label auxiliary information and the video data of the original video to generate an updated integrated video material carrying the updated label information.

Step 612 includes storing the updated integrated video material, or sharing the updated integrated video material on a sharing platform.

According to the method for producing a video material provided by this embodiment, in response to the operation of inserting the label triggered by the user, the timestamp of the currently played video image is acquired in the original video; the label information added by the user for the video image is acquired; and the label information, the timestamp and the video data of the original video are associated and integrated to generate the integrated video material carrying the label information. Since the integrated video material is one file, the integrated video is convenient to be stored and shared, and can be quickly invoked and buffered when being played. Moreover, the user can directly add the label information to the data of the original video while watching the original video, which is convenient to operate and retains the integrity of the original video. When the integrated video material is repeatedly watched subsequently, the label position can be quickly and accurately located, so that a search time is reduced and learning efficiency is improved, thereby improving a user experience.

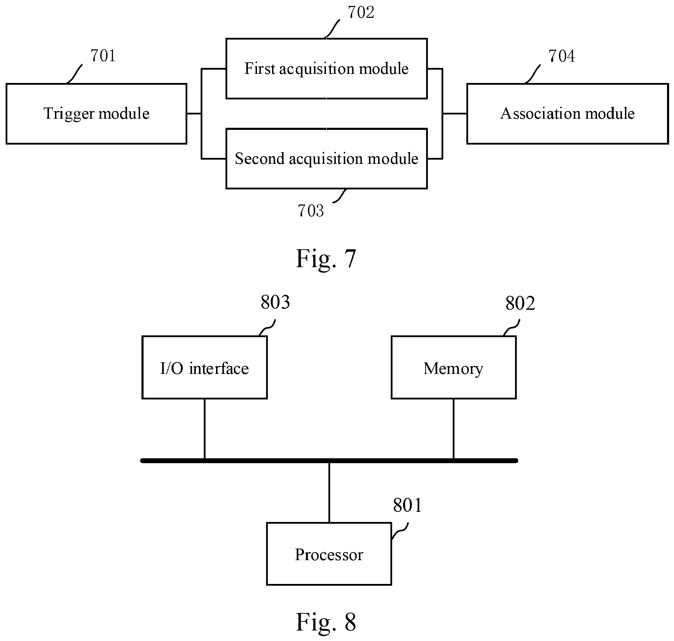

In a second aspect, embodiments of the present disclosure provide an apparatus for producing a video material. Fig. 7 is a schematic block diagram of an apparatus for producing a video material according to embodiments of the present disclosure. As shown in Fig. 7, the apparatus for producing a video material includes following modules.

A trigger module 701 is configured to trigger, in response to a trigger instruction of a user, an operation of inserting a label.

In some embodiments, in the process of playing the original video, the user may trigger the operation of inserting a label through a trigger button, a trigger action or a trigger voice on a playback page. When the terminal is a computer terminal, the trigger operation may be implemented by a mouse, a keyboard or the like. For example, when the trigger operation is performed using a mouse, a preset operation button is clicked by the mouse, and a click action may be a single click or a double click. For another example, when the trigger operation is performed using a keyboard, a preset shortcut key is pressed. The shortcut key may be any key on the keyboard or a combination of multiple keys on the keyboard. A specific setting method of the shortcut key and a type of the shortcut key are not limited herein.

A first acquisition module 702 is configured to acquire a timestamp of a currently played video image in an original video.

The timestamp refers to a time node of the video image in the original video. The currently played video image refers to an image displayed on a display screen of the terminal at a current time. For example, the terminal plays Chapter X, Section X of a mathematics course of a video courseware, and what is displayed on the display screen of the terminal at the current time is a video image of the video courseware at 9:30 (9 minutes and 30 seconds), so the timestamp corresponding to the video image is 9:30.

A second acquisition module 703 is configured to acquire label information added by the user for the video image.

The label information includes a mark, a learning note, a review and the like. Here, the mark corresponds to a bookmark, which is only used to indicate that a video image is important. The learning note is a note added by the user for a video image, which may be an explanation or question of a content of the video image, or may be a summary or a brief summary. Alternatively, the note is a summary or explanation of the video image and a video segment before the video image.

In some embodiments, the user may add a label to the video image by invoking a label entry module, which may be a label control embedded in a player program. For example, after the user operates an activation button, the label entry module is activated, a label editing page is displayed on the display screen of the terminal, and the user can input and edit a content on the label editing page.

In some embodiments, the second acquisition module 703 is a label entry module. The label entry module is an application program installed on the terminal, such as a writing pad and a sticky note, and a player is associated with the application program. When the user touches an activation button, the application program installed on the terminal is invoked, and the display screen displays an interface of the application program. For example, when the writing pad is associated with the player, if the user slides an activation button, the writing pad is invoked, the display screen displays an interface of the writing pad, and the user can edit a content of a label on the writing pad. After the content of the label is edited, the user can click a finish button, and the content of the label is automatically associated with a timestamp and video data of an original video.

In some embodiments, when the user activates the operation of inserting a label, an activated label entry module and an invoked editable application may occupy an entire page of the display screen or part of the display screen.

An association module 704 is configured to associate and integrate the label information, the timestamp and video data of the original video to generate an integrated video material carrying the label information.

The integrated video material includes not only the video data of the original video, but also the label information and the timestamp. The timestamp is associated with the label information, and meanwhile the label information and the timestamp are associated with the video data of the original video.

In this embodiment, the label information, the timestamp and the video data of the original video are integrated into the integrated video material through a data model, and the integrated video material can be regarded as an original video containing more information, that is, the integrated video material is one file. When playing an integrated video material, a player can directly parse the integrated video material, and display all time nodes of added labels in the integrated video material according to timestamps, and the user can view label information by only clicking a corresponding time node. The data model may be any model capable of associating and integrating label information, a timestamp and video data of an original video, which is not limited herein.

In some embodiments, a player may display a time node at which a label is added according to a preset icon. The preset icon may be a cartoon graphic, an animal graphic, a pointer graphic or a time graphic. For example, the time graphic shows a time in hours, minutes and seconds. In some embodiments, if a duration of the integrated video material is less than one hour, the time graphic shows only minutes and seconds. If the duration of the integrated video material exceeds one hour, the time graphic shows hours, minutes and seconds.

According to the apparatus for producing a video material provided by this embodiment, the trigger module is configured to trigger, in response to the trigger instruction of the user, the operation of inserting the label; the first acquisition module is configured to acquire the timestamp of the currently played video image in the original video; the second acquisition module is configured to acquire the label information added by the user for the video image; and the association module is configured to associate and integrate the label information, the timestamp and the video data of the original video to generate the integrated video material carrying the label information. Since the integrated video material is one file, the integrated video is convenient to be stored and shared, and can be quickly invoked and buffered when being played. Moreover, the user can directly add the label information to the data of the original video while watching the original video, which is convenient to operate and retains the integrity of the original video. When the integrated video material is repeatedly watched subsequently, the label position can be quickly and accurately located, so that a search time is reduced and learning efficiency is improved, thereby improving a user experience.

In a third aspect, referring to Fig. 8, embodiments of the present disclosure provide an electronic device, including:
one or more processors 801;
a memory 802 storing one or more programs, which, when executed by the one or more processors, cause the one or more processors to implement any of the above methods for producing a video material; and
one or more I/O interfaces 803 connecting the processors and the memory and configured to implement information interaction between the processors and the memory.

The one or more processors 801 are a device having a data processing capability, including but not limited to a central processing unit (CPU) and the like; the memory 802 is a device having a data storage capability, including but not limited to, a random access memory (RAM, more specifically, SDRAM, DDR and the like), a read only memory (ROM), a charged erasable programmable read only memory (EEPROM), and a flash memory (FLASH); and the one or more I/O interfaces (read/write interfaces) 803 are connected between the processors 801 and the memory 802 to implement information interaction between the processors 801 and the memory 802, and include, but are not limited to a Bus.

In some embodiments, the processors 801, the memory 802 and the I/O interfaces 803 are interconnected through a bus and are further connected to other components of a computing device.

In a fourth aspect, embodiments of the present disclosure provide a computer readable medium storing a computer program, which, when executed by a processor, implements any of the above methods for producing a video material.

It should be appreciated by those skilled in the art that all or some of the steps and systems of the above disclosed method and the functional modules/units of the apparatus may be implemented as software, firmware, hardware and appropriate combinations thereof. In a hardware embodiment, the division between the functional modules/units mentioned in the above description does not necessarily correspond to the division of physical components. For example, a physical component may have multiple functions, or a function or step may be cooperatively performed by several physical components. Some or all of the physical components may be implemented as software executed by a processor, such as a central processing unit, a digital signal processor or a microprocessor, or as hardware, or as an integrated circuit, such as an application specific integrated circuit. Such software may be distributed on a computer readable medium, which may include a computer storage medium (or s non-transitory medium) and a communication medium (or a transitory medium). As is well known to those skilled in the art, a term of a computer storage medium includes volatile and nonvolatile, removable and non-removable media embodied in any method or technique for storing information, such as a computer readable instruction, a data structure, a program module or other data. The computer storage medium includes, but is not limited to, a RAM, ROM, EEPROM, flash memory or other memory technology, a CD-ROM, digital versatile disk (DVD) or other optical disk storage, a magnetic cassette, magnetic tape, magnetic disk storage or other magnetic storage device, or any other medium that can be used to store desired information and can be accessed by a computer. Furthermore, it is well known to those skilled in the art that a communication medium generally includes a computer readable instruction, a data structure, a program module, or other data in a modulated data signal such as a carrier wave or other transmission mechanism, and may include any information delivery medium.

Example embodiments are disclosed herein. Although specific terms are adopted, they are used and should only be interpreted as generic descriptive meanings, and are not used for the purposes of limitation. In some embodiments, it is obvious to those skilled in the art that unless specifically indicated otherwise, features, characteristics and/or elements described in combination with a specific embodiment may be used alone, or may be used in combination with features, characteristics and/or elements described in combination with other embodiments. Accordingly, those skilled in the art should appreciate that various changes in form and detail may be made without departing from the scope of the present disclosure as set forth in the appended claims.

## Claims

1. A method for producing a video material, the method comprising:
acquiring , in response to an operation of inserting a label triggered by a user, a timestamp of a currently played video image in an original video;
acquiring label information added by the user for the video image; and
associating and integrating the label information, the timestamp and video data of the original video to generate an integrated video material carrying the label information.

2. The method according to claim 1, wherein acquiring the label information added by the user for the video image comprises:
acquiring the label information added by the user for the video image through a label entry module.

3. The method according to any one of claims 1 to 3, wherein before associating and integrating the label information, the timestamp and the video data of the original video to generate the integrated video material carrying the label information, the method further comprises:
acquiring label auxiliary information, wherein the label auxiliary information is a description of the label and a restricted usage authority; and
associating and integrating the label information, the timestamp and the video data of the original video to generate the integrated video material carrying the label information comprises:
associating and integrating the label information, the timestamp, the label auxiliary information and the video data of the original video to generate the integrated video material carrying the label information.

4. The method according to claim 3, wherein the label auxiliary information comprises at least one of user information, user configuration information or an identifier of the original video.

5. The method according to claim 4, wherein the user information comprises a user account and/or an identifier of a terminal device used by the user; and the user configuration information comprises user authority information.

6. The method according to any one of claims 1 to 5, wherein after associating and integrating the label information, the timestamp and the video data of the original video to generate the integrated video material carrying the label information, the method further comprises:
parsing, in response to a playback instruction of the user, the integrated video material to obtain all the label and the label information in data of the integrated video material;
displaying all the label on a playback page; and
displaying, based on the label selected by the user, the label information corresponding to the selected label.

7. The method according to claim 6, wherein after displaying the label information corresponding to the video node based on the video node selected by the user, the method further comprises:
receiving modification information of the user for the label, and updating the label information based on the modification information; and
associating and integrating the updated label information, the timestamp, the label auxiliary information and the video data of the original video to generate an updated integrated video material carrying the updated label information.

8. The method according to any one of claims 1 to 5, wherein after associating and integrating the label information, the timestamp and the video data of the original video to generate the integrated video material carrying the label information, the method further comprises:
sharing the integrated video material to a sharing platform for another user on the sharing platform to obtain the integrated video material.

9. The method according to any one of claims 1 to 5, wherein before acquiring, in response to the operation of inserting the label triggered by the user, the timestamp of the currently played video image in the original video, the method further comprises:
filtering a video resource based on video usage information to obtain the original video, wherein the video usage information comprises one or more of a playback amount of a video, a replay rate of the video, a user comment of the video and a number of a like of the video.

10. The method according to any one of claims 1 to 5, wherein the label information comprises a mark and/or a note.

11. An apparatus for producing a video material, the apparatus comprising:
a trigger module, configured to trigger, in response to a trigger instruction of a user, an operation of inserting a label;
a first acquisition module, configured to acquire a timestamp of a currently played video image in an original video;
a second acquisition module, configured to acquire label information added by the user for the video image; and
an association module, configured to associate and integrate the label information, the timestamp and video data of the original video to generate an integrated video material carrying the label information.

12. An electronic device, comprising:
one or more processors;
a memory storing one or more programs, which, when executed by the one or more processors, cause the one or more processors to implement the method according to any one of claims 1 to 10; and
one or more I/O interfaces connecting the processors and the memory and being configured to implement information interaction between the processors and the memory.

13. A computer readable medium storing a computer program, which, when executed by a processor, implements the method according to any one of claims 1 to 10.
